## Europäisches Patentamt

## European Patent Office

## Office européen des brevets

(19)

(11) Publication number: **0 012 102 B1**

(12)

# EUROPEAN PATENT SPECIFICATION

(45) Date of publication of patent specification: **18.07.84**

(51) Int. Cl.³: **H 04 M 17/02**

(21) Application number: **79730008.4**

(22) Date of filing: **22.11.79**

(54) **Public telephone sets.**

(30) Priority: **25.11.78 JP 145785/78**

(43) Date of publication of application:
**11.06.80 Bulletin 80/12**

(45) Publication of the grant of the patent:
**18.07.84 Bulletin 84/29**

(84) Designated Contracting States:
**BE CH DE GB SE**

(56) References cited:
**DE - A - 2 124 287**
**DE - B - 1 285 018**
**FR - A - 2 350 017**
**GB - A - 2 005 517**
**US - A - 3 449 524**
**US - A - 4 039 768**

**HASLER REVIEW, vol. 9, no. 2, Summer 1976,
pages 51-56 Bern, CH. NYFFENEGGER: "The
New Coin Box Set AZ44"**

(73) Proprietor: **TAMURA ELECTRIC WORKS, LTD.
2-3, Shimomeguro 2-chome
Meguro-ku Tokyo (JP)**

(72) Inventor: **Kinoshita, Toshiharu
32-25, Komaba 1-chome
Meguro-ku, Tokyo (JP)**
Inventor: **Hayamizu, Hitoshi
1-36-12, Kaminomiya Tsurumi-ku
Yokohama City, Kanagawa Prefecture (JP)**
Inventor: **Kunil, Shuji
13-21, Aioi 3-chome
Sagamihara City Kanagawa Prefecture (JP)**

(74) Representative: **Meinig, Karl-Heinz et al,
Kurfürstendam 170
D-1000 Berlin 15 (DE)**

(56) References cited:
**REVIEW OF THE ELECTRICAL
COMMUNICATION LABORATORIES, vol. 21,
nos. 9-10, September-October 1973, pages 622-
636 Tokyo, JP. TABIICHI: "Development of New
Booth Type Coin Telephone Set for Direct
Distance Dialing"**

Courier Press, Leamington Spa, England.

## Description

This invention relates to a public telephone set, more particularly a public telephone set capable of detecting or locating a faulty portion.

In the FR 2 350 017 a public telephone set is described comprising a telephone circuit connected to office lines and including the handset having a transmitter and a receiver, dial signal transmitter, and a hook switch adapted to complete a speech loop. The set is provided with a money unit for sorting money inserted through a money slot, an accumulator for accumulating money sent from the coin unit and a money box for collecting money. A microcomputer monitors the payment operation and establishes the connection to the office lines.

In the US 40 39 768 a pay telephone station monitor system is described which monitors the operation of a pay telephone station and detects malfunction of the pay station.

The monitor system senses the impedances of the transmitter and receiver elements in the handset of the telephone, the time delay between removing the handset from the cradle and the occurrence of dial tone and the delay between the onset of dial tone and dial tone break. If a malfunction is occurring an alarm signal is produced, which is transmitted to a central office to produce a visual output display upon predetermined occurrences of the alarm signals.

The Hasler Review, volume 9, No. 2, p. 51—56, 1978, describes a coin box set which is provided with a microprocessor controlling the operation of the set. During the operation the handling of the money can be monitored and if a fault occurs, this can be signalled on the credit display.

The known telephone sets enable a user to talk by merely inserting a coin or coins and they monitor the operation but they cannot detect presence or absence of a fault before starting as public telephone sets, so that the user becomes aware of the presence of the fault only after starting to use the telephone set and dialing. He therefore is wasting time and losing money. To repair a malfunction occurring not during proper operation as a public telephone set a maintenance man must successively inspect various parts according to a maintenance manual which is extremely troublesome.

Therefore the purpose of the invention is to provide a public telephone set including a monitoring system which immediately after the handset is lifted before the proper working of the telephone set monitors sequentially the outputs of the sensors of the set and in the case of a fault informs the user of the occurrence of the malfunction and provides the dial tone not to be transmitted to the user's handset.

According to this invention these problems are solved by providing a telephone set according to the preamble with the characterizing features of the main claim.

The present invention allows that the presence or absence of a fault of a public telephone set can be self diagnosed by merely hooking off operation to display fault to the user as well as the faulty point to the maintenance man and operator, thus preventing use of a faulty telephone set.

According to the self diagnoses of the present invention, the user can be informed of a disorder prior to the insertion of the coin and immediately after hook off without going through the unnecessary dialing process. Therefore the user is prevented to insert coins and he will not lose money.

Moreover, as the maintenance man can readily know faulty points by hooking off and closing the maintenance switch, the faulty point can be confirmed at once, whereby it is possible to make suitable repair without performing any inspection. For this reason, the repair man can judge at once whether he can repair in the field or should bring the faulty telephone set to a repair shop. The same advantage can also be realized in the examination of completed telephone sets in a manufacturing factory.

Further objects and advantages of the invention can be more fully understood from the following detailed description taken in conjunction with the accompanying drawings in which:

Figure 1 is a diagrammatic sectional view showing the construction of a coin collecting unit of a public telephone set embodying the invention;

Figure 2 is a block diagram showing the basic construction of a public telephone set system embodying the invention;

Figure 2A is a connection diagram of a speech circuit and a speech control circuit.

Figure 3 is a block diagram showing the construction of the control circuit shown in Figure 2 and the relationship between the control circuit and an input/output circuit associated therewith;

Figure 4 is a flow chart showing execution steps of detecting a fault by the control circuit;

Figure 5 is a block diagram showing the construction of a coin processing circuit shown in Figure 2 and the input/output circuit associated therewith;

Figure 6 is a flow chart showing the excution steps of detecting a fault by the coin processing circuit;

Figure 7 through 14 are flow charts showing the execution steps of detecting a fault according to another embodiments of this invention.

Description of the preferred embodiments

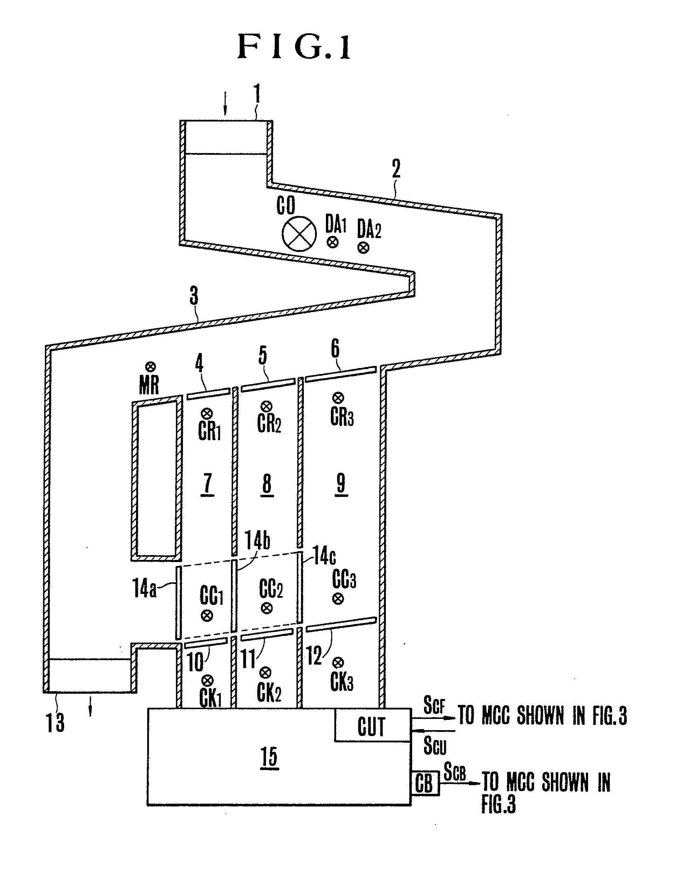

A coin collecting unit shown in Figure 1 utilized in a public telephone set embodying the present invention is designed to use low, medium and high price coins such as 10 Yen, 50 Yen and 100 Yen coins of the Japanese currency, for example. Coins inserted into a slot 1 pass through a first inclined passageway 2 with a material discriminator CO and coin detectors DA1 and DA2 which detect the outer diameter of the coins and are disposed on both sides thereof, then through a second inclined passageway 3. When accumulation levers 4, 5 and 6, driven by the outputs of the material discriminator CO and the coin detectors DA1 and DA2 which discriminate whether the coin is a genuine or a counterfeit one and determine the outer diameter of the coins, are moved laterally with respect to the second inclined passageway 3, low price coins drop into a low price pocket 7, medium price coins into a medium price pocket 8 and high price coins into a high price pocket 9 respectively. These coins are piled up on collecting levers 10, 11 and 12 respectively and accumulated according to the type of the coins. When improper or counterfeit coins are detected, the accumulating levers 4, 5 and 6 would not be operated so that these coins roll on the accumulating levers 4, 5 and 6 and are returned to a coin returning opening 13.

By a hook-on operation made at the time of termination of a speech, returning levers 14a, 14b and 14c are operated to shift towards the left the coins accumulated on the accumulating levers 10 to 12 thereby returning these coins through the returning opening 13.

As a detector of the material discriminator CO may be used an electric coil connected to an oscillation circuit. With this arrangement, the coil is influenced by the permeability or transmissivity corresponding to the material of the coin so that the output of the oscillation circuit varies which is used to discriminate the material of the coins. Such discriminator is well known in the art.

The coin detectors DA1 and DA2 are constructed such that a luminous element, a photodiode for example, and a light receiving element, for example a photo-transistor are disposed to confront each other so as to detect a coin depending upon the presence or absence of light impinging upon the light receiving element caused by the presence or absence of the coin. The diameter of the coin can be detected by the following equations

$$\frac{S}{L} = \frac{t1}{t2} \qquad (1)$$

or

$$\frac{L}{S} = \frac{t2}{t1} \qquad (2)$$

where $S = t1 \cdot V$, V represents the rolling speed of the coins passing by the coin detectors DA1 and DA2, t1 the time necessary for the coins to pass by the coin detector DA1, t2 the time required for the coins to pass between the coin detectors DA1 and DA2, and L the distance between the coin detectors DA1 and DA2. Since S is determined by the size of the coins and the inclination of the first inclined passageway 2, and L is predetermined, it is necessary to calculate only the righthand terms of equations (1) and (2).,

In addition to the elements described above, there are also provided coin detectors CR1 to CR3, CC1 to CC3 and MR similar to the coin detectors DA1 to DA2. Coin detectors CR1 to CR3 detect the number of the accumulated coins, the coin detectors CC1 to CC3 detect the coins prior to the collection, while the coin detectors CK1 to CK3 detect the collected coins. The coin detector MR detects the returned coins. As the collecting levers 10 to 12 are moved laterally to collect only one waiting coin, the outputs of the coin detector CC1 to CC3 disappear whereas the coin detectors CK1 to CK3 produce output whereby the fact that the coins have been collected in a coin collecting box 15 can be confirmed. The number of the remaining coins is determined by the difference between the outputs of the coin detectors CR1 to CR3 which represent the number of the accumulated coins and the outputs of the coin detectors CK1 to CK3 which represent the number of the collected coins. The sum of the number of returned coins determined by the coin detector MR and the total number of the accumulated coins should be equal to the number of inserted coins detected by the coin detector DA1 or DA2. The purpose of the coin detector MR is to confirm the number of the accumulated coins based on this calculation.

The coin collecting unit is constructed such that it preferentially collects low price coins in response to a rate signal from a telephone exchange, and when it collects medium and high price coins it will collect the next coin after elapse of a speech time determined by the value of the collected coins, in response to a rate signal. The coin box 15 is provided with an electromagnetic accumulating counter CUT which in response to the outputs of the coin detectors CK1 to CK3 counts the number of count pulses sent from a control circuit MCC to be described later. When the count of the counter CUT reaches a value showing that the coin box is filled with coins, the counter CUT produces a full signal $S_{CF}$. It is to be understood that the counting operation of the accumulating counter CUT is performed in terms of a ratio of the volume of the medium and high price coins to that of the low price coins. For example, when the ratio of volumes of the low, high and medium price coins is 1:4:6 the counting is made once for a low price coin, but 4 and 6 times for medium and high price coins respectively. The accumulating counter is automatically reset when the coin box 15 is removed. A switch CB is provided near the coin box 15 to check the same.

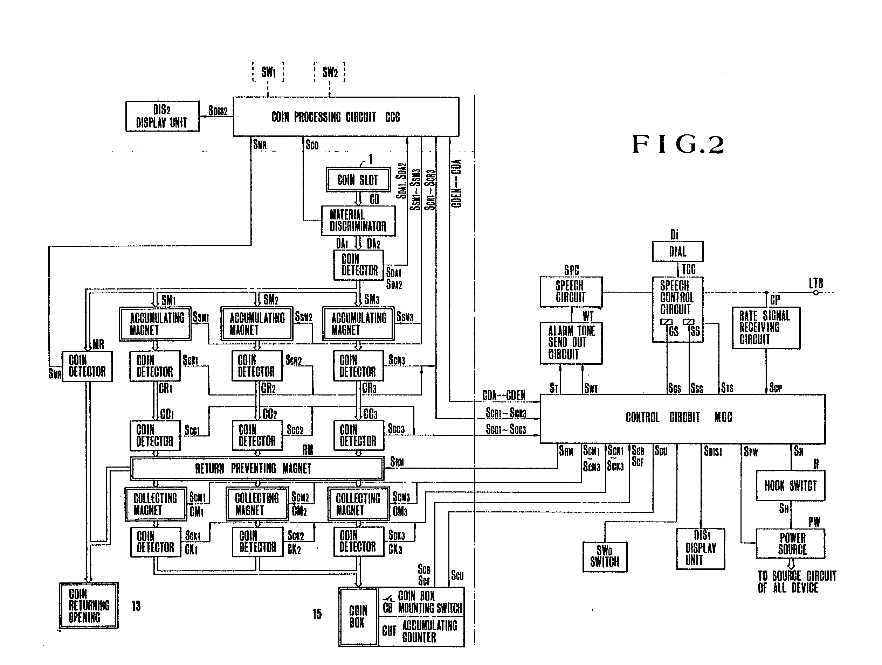

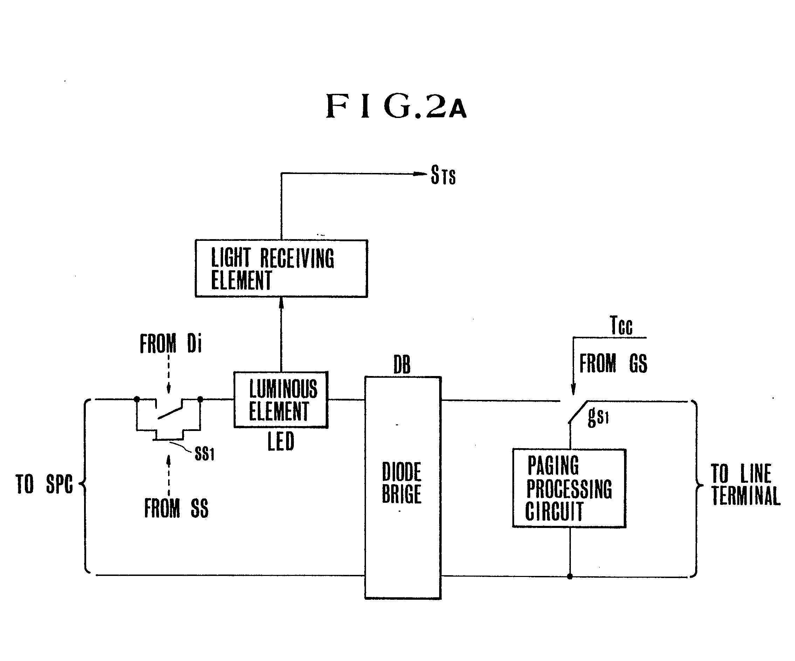

Figure 2 is an entire block diagram of a public telephone set including the material discriminator CO, various coin detectors DA1, DA2, CR1 to CR3, CC1 to CC3, CK1 to CK3 and MR, accumulating magnets SM1 to SM3 for driving levers 4 to 6, 10 to 12 and 14 respectively, collection magnets CM1 to CM3, and a return magnets RM of the coin collecting unit. The control device comprises a coin processing circuit CCC and a control circuit MCC.

To provide inherent performance of the telephone set, as shown in Figure 2A, there are provided a speech circuit SPC including an induction coil, a handset etc., and a speech control circuit TCC connected between the speech circuit and line terminals LTB and including a relay GS for actuating a loop closing contact gs1, a relay SS for short circuiting a dial impulse contact ss1, a luminous diode LED and a light receiving element which are used to detect loop currents, a diode bridge DB for supplying unidirectional current to the luminuous element and a paging processing circuit. A push button dial Dil is connected in parallel with the speech control circuit.

Across the line terminals LTB is connected a rate signal receiving circuit CP (see Figure 2) including a band pass filter and an amplifying filter, not shown, to detect a rate signal having a frequency of 500 Hz or 16 KHz and sent from the telephone exchange at each end of a unit speech time thus producing a pulse signal.

An alarm tone send out circuit WT is provided to produce an alarm tone having a frequency of 250 Hz. It is constructed to start an oscillation circuit when it receives a coin insertion request signal $S_{WT}$ and a fault detection signal ST for sending the alarm tone to a receiver of the handset in the speech circuit SPC via a matching transformer thus urging the user to insert coins by sound and a detection informing of a fault to the user. In this example, the coin insertion demand signal is an interrupted tone, whereas the information of the fault detection is made by a continuous tone.

The control circuit MCC is started when the hook switch H is closed by hook-off, and the power circuit PW is closed by the closure of the hook switch H to supply power to all devices. When supplied with signals CDA and CDEN, the control circuit MCC and the coin processing circuit CCC exchange fault detection informations in their respective ranges. The control circuit MCC drives a display unit DIS1 on the telephone set comprising a character display device and a display lamp in the form of a luminous diode. The character display device displays the number of remaining speech time units determined by the value of the collected coins, whereas the display lamp displays not usable state in response to a fault detection and a full state of the coin state. When a fault is detected, a latch type maintenance switch SW is manually operated to display a code corresponding to a faulty part as a digit or alphabet on the character display device.

Also the coin processing circuit CCC drives a display unit DIS2 utilizing a character display device and mounted on the telephone set, and when a fault is detected in a range allocated thereto, a code corresponding to the faulty part is displayed thus correctly informing the faulty part to the maintenance man.

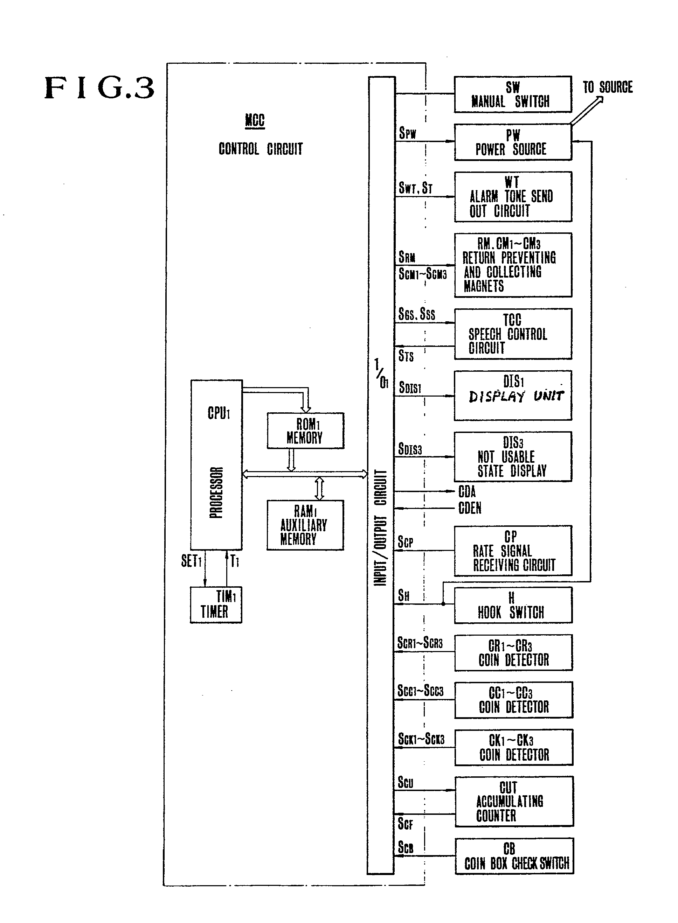

The construction of the control circuit MCC and input and output of various signals to and from the control device are shown in the block circuit shown in Figure 3. The control circuit MCC is constituted by a processor CPU1 such as a microprocessor or the like, a memory device ROM1, an auxiliary memory device RAM1, an input/output circuit I/O, and a timer TIM1. As the memory device ROM1 is used a fixed memory device which stores a program for detecting faults of a predetermined part. As the auxiliary memory device RAM1 is used a random access memory device for sequentially storing various informations necessary to operate the control circuit MCC.

When the handset is hooked off prior to the use of the telephone set, the hook switch H applies a hook-off signal $S_H$ to the processor CPU1 via the input/output circuit I/O. At the same time, the source circuit PW produces an output in response to the hook-off signal $S_H$, the control circuit MCC is rendered operative. At this time, the processor CPU1 clears all addresses of the auxiliary memory device RAM1 and changes various signals $S_{PW}$, $S_{WT}$, $S_{RM}$, $S_{CM1}$ to $S_{CM3}$, $S_{GS}$, $S_{SS}$, $S_{DIS1}$ and $S_{CU}$ passing through the input/output circuit I/O1 to reset states, for example to low level states "0", thus setting an initial state. At the same time, the processor CPU1 applies a set signal SET1 to the timer TIM1 to start the same. Further, the processor CPU1 designates an address iND0 of the auxiliary memory device RAM1.

The parts to be examined are the speech control circuit TCC, the rate signal receiving circuit CP, the coin detectors CC1 to CC3, CK1 to CK3, the accumulating counter CUT of the coin box, a reed switch CB mounted on the coin box and operated when the coin box 15 is mounted on a predetermined position and the fault signal CDEN produced by the coin processing circuit CCC. Immediately after setting the initial state, the processor CPU1 begins to read out the program from the memory device ROM1 so as to sequentially detect faults of the parts to be examined according to the program. Transmission and reception of various signals are effected through a suitable drive circuit or a buffer circuit, not shown.

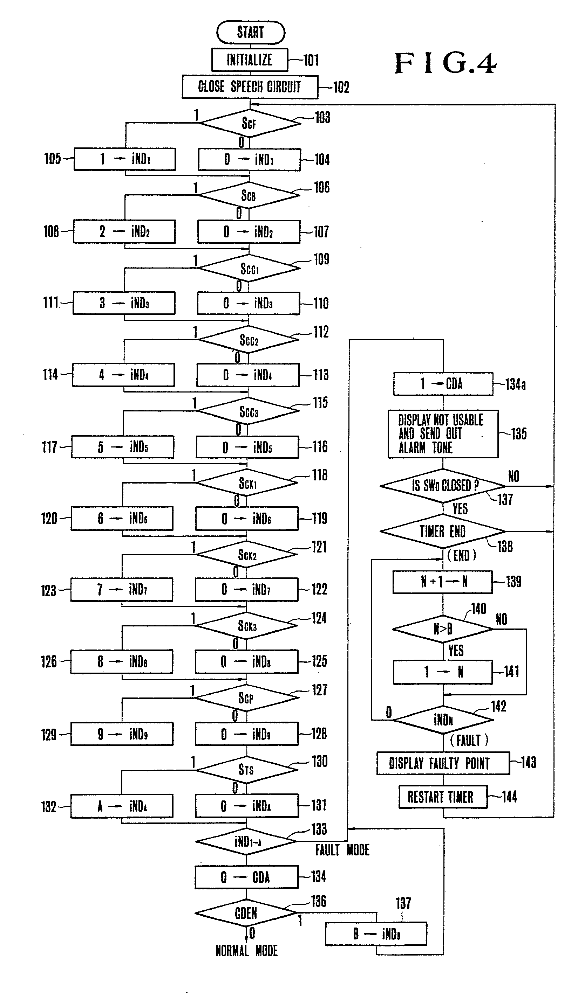

Figure 4 is a flow chart showing execution steps of detecting faults effected by the control circuit MCC. When a hook-off signal is supplied to the control circuit MCC, this signal makes an access to CPU1 via the input/output circuit I/O1 to commence the following processing operations.

More particularly, at step 101, all addresses of the auxiliary memory device RAM are cleared and an address iND0 is designated to set the input and output signals $S_{PW}$, $S_{WT}$, $S_{RM}$, $S_{SM1}$ to

$S_{CM3}$, $S_{GS}$, $S_{SS}$, $S_{DIS1}$ and $S_{CU}$ to the initial states (low levels "0") through the input/output circuit I/O1. Further, the processor CPU1 sends a set signal SET to the timer TIM to cause it to begin to count time.

Then the program is advanced to step 102 to send a signal $S_{GS}$ to the relay GS of the speech control circuit $T_{CC}$ via the input/output circuit I/O1. Thus, the relay GS is energized to switch the contact gs1 shown in Figure 2A to establish a loop circuit to the telephone exchange thus forming a speech circuit. In this manner, a speed channel loop is closed by the hook-off operation. As shown in Figure 2A, since the luminous diode LED is included in the loop circuit, the luminous diode luminesces when the loop circuit is closed. In response to the light emitted by the luminous diode, the light receiving element RD sends a speech loop current detection signal $S_{TS}$ to MCC.

Then, at step 103, the CPU1 checks the signal $S_{CF}$ sent from the accumulating counter CUT via the input/output circuit I/O1, and when it is "0", the program is advanced to step 104 to judge that the coin box 15 is not yet filled thereby storing a code [0] in the address iND1 of the auxiliary memory device RAM1. If the signal $S_{CF}$ is "1" it is judged that the coin box 15 is full and this condition is deemed as a fault and the program is advanced to step 105 at which a code [1] is stored in the address iND1 of the auxiliary memory device RAM1 as a fault signal.

Then, at step 106, the signal $S_{CB}$ sent from the coin box mounting switch CB via the input/output circuit I/O1 is checked, and if this signal is "0", it is judged that there is no fault and the program is advanced to step 107 where a code [0] is stored in the address iND2 of the auxiliary memory device RAM1.

On the other hand, if the signal $S_{CB}$ is "1", at step 108 it is judged that the relay CB is not operated, that is the coin box 15 has not yet been mounted. This condition is also deemed as a fault and a code [2] would be stored in the address iND2 of the auxiliary memory device RAM1.

A signal $S_{CC1}$ from the coin detector CC1 is also checked. However, this state is the state appearing immediately after setting the initial state and since no coin has been inserted, if the signal $S_{CC1}$ is "0", it is judged that the telephone set is normal and the program is advanced to step 110 where a code [0] is stored in the address iND2 of the auxiliary memory device RAM1. If the signal $S_{CC1}$ is "1", the detector CC1 judges that the luminous element or the light receiving element disposed along the coin passageway is faulty or there is a fault caused by the clogging of the passageway by coins, thereby storing [1] in address iND3 of the auxiliary memory device RAM1 as a fault signal. The other coin detectors CC2, CC3, CK1 to CK3 are checked in the same manner according to an order just mentioned. These steps are shown by steps 112 through 122 shown in Figure 4. When the outputs of the detectors CC2, CC3, CK1 to CK3 are "0" that is normal, codes [0] are stored in addresses iND4 to iND8 of the auxiliary memory device RAM1 at steps 113, 116, 119, 122 and 125 respectively. If the outputs are "1", codes [1] are stored in the addresses iND4 to iND8 at steps 114, 117, 120, 123 and 126 respectively.

Then the program is advanced to step 127 to check a rate signal $S_{CP}$ sent from the rate signal receiving circuit CP. However, when the rate signal is not received and when it is "0", the condition is judged normal and the step is advanced to step 128 where code [0] is stored in the address iND9 of the auxiliary memory device RAM1. On the other hand, if the rate signal is "1" it is judged that there is a fault and the step is advanced to step 129 where a code [9] is stored as a fault signal.

At step 130 the loop current detection signal $S_{TS}$ is produced by the light receiving element RD which receives the light from the luminous element LED. When the signal $S_{TS}$ is "0" it is judged that current is flowing through the loop that is that the speech circuit has been closed by relay GS and the program is advanced to step 131 where a normal code [0] is stored in the address iNDA of the auxiliary memory device RAM1. On the other hand, if the signal $S_{TS}$ is "1" it is judged that there is a fault of nonestablishment of the speech circuit caused by the fault of the relay GS and the program is advanced to step 132 where a code [A] is stored in the address iNDA in the same manner as above described.

When fault detection is made as above described by checking various parts to be examined, the program is advanced to step 133 where the contents of respective addresses iND1 to iNDA are read out and where all codes are [0] it is judged that there is no fault. Then the program is advanced to step 134. If the codes are any one of [1] through [A], it is judged that there is a fault and the program is transferred to a "fault mode", that is step 135 and the succeeding steps.

Where it is judged that there is no fault, the step is advanced to step 134 to send a signal CDA to the coin processing circuit CCC as a code [0]. Thereafter the step is advanced to step 136 to check the signal CDEN from the coin processing circuit CCC. If the signal CDEN is a code [0] it is judged that there is no fault in the coin processing circuit CCC thus transferring the mode to the "normal mode" to execute various control operations necessary for the inherent performance of the telephone set. If at step 136, the signal CDEN is a code [1], it is judged that there is a fault in the coin processing circuit and the program is advanced to step 137 where a code [B] is stored in the address iND3 of the auxiliary memory device RAM1 as a fault signal. Then this information is handled as a portion of the "fault mode" and the program is advanced to step 135. At the fault mode, at step 134a, the CPU1 sends a signal CDA of [1] to the coin processing circuit CCC. Then at step 135, the processor CPU1 sends a signal $S_{DIS1}$ to the display unit DIS1 via the input/output circuit I/O1 according to the program of the memory device ROM1 thus causing the display "not usable" to indicate a fault. Concurrently therewith the control circuit MCC produces a signal $S_{WT}$ which operates the alarm tone send out circuit WT thus causing the receiver of the handset in the speech circuit SPC to generate an alarm tone. Thus, due to the self diagnosis described above, a fault is informed to the user by the informing circuit including the display unit DIS1 and the alarm tone send out circuit WT.

At the "normal mode", insertion of a coin by the user produces a signal $S_{ss}$ which operates relay SS to break the shorting circuit for the dial impulse contact SS1 to the speech control circuit TCC shown in Figure 2A thus sending a dial tone. However, during the "fault mode" signal $S_{ss}$ is not produced and shorting circuit is not interrupted so that it is impossible to transmit the dial tone thus preventing use of telephone set.

Furthermore, during the "fault mode" by the manipulation of the maintenance switch SW, the character display device of the display unit DIS1 displays codes corresponding to the faulty parts according to the content of the auxiliary memory device RAM1 in the following steps.

More particularly, as shown in Figure 4, at step 136 following the alarm tone sending step 135, a check is made as to whether the switch SW0 is closed or not. If the switch SW0 is closed, the program is advanced to step 138. If the switch SW0 is open, the step is returned to step 103 to execute the same processing as above described. At step 138, a check is made as to whether the timer TIM1 has counted a predetermined time or not, that whether the timer has produced an output T1 or not.

At step 138, when the processor CPU1 receives the output T1 of the timer TIM1 an idle address iND0 of the auxiliary memory device RAM1 is used as a count out address and then a digital [1] is sequentially added to the content N of the idle address at step 139 to form a new content N. At step 140, this operation is repeated until the content N becomes equal to a value B of the address number representing the address iNDB of the auxiliary memory device RAM1. When the content N becomes equal to the value of the address number B, the content N is changed again to a value [1] at step 141 and a value [1] is sequentially added at step 142.

Accordingly, at step 142, the contents of addresses iND1 to iNDB in which informations regarding the presence and absence of a fault have been stored are sequentially read out by using the content N of the counter address. If one of the codes [1] to [B] is of the fault signal in any one of the addresses, at step 143 a signal $S_{DIS1}$ corresponding to the code is read ouf to display a code representing a fault of a smallest address number by the character display device of the display unit DIS1. The display time is the same as the operating time of the timer, about one second, for example. At step 143, the timer is started again to return the program to the step 103 and the following steps to display a faulty part of the next address number and all stored fault signals are sequentially and repeatedly displayed. This display is continued as long as the maintenance switch is in the closed state. Although in the display unit DIS1, faults of various parts to be inspected and allocated for the control circuit MCC are displayed independently, and the faults allocated for the coin processing circuit CCC are displayed simultaneously, by allocating the check points of the fault to respective segments of a letter 8 shaped display element and then extinguishing segments corresponding to the faulty parts. The operation described above is repeated during a definite interval and if a fault is recovered its display is immediately stopped. If the timer TIM1 does not generate the signal T1 at step 138, the program is returned to the initial step 103 to repeat the same processing.

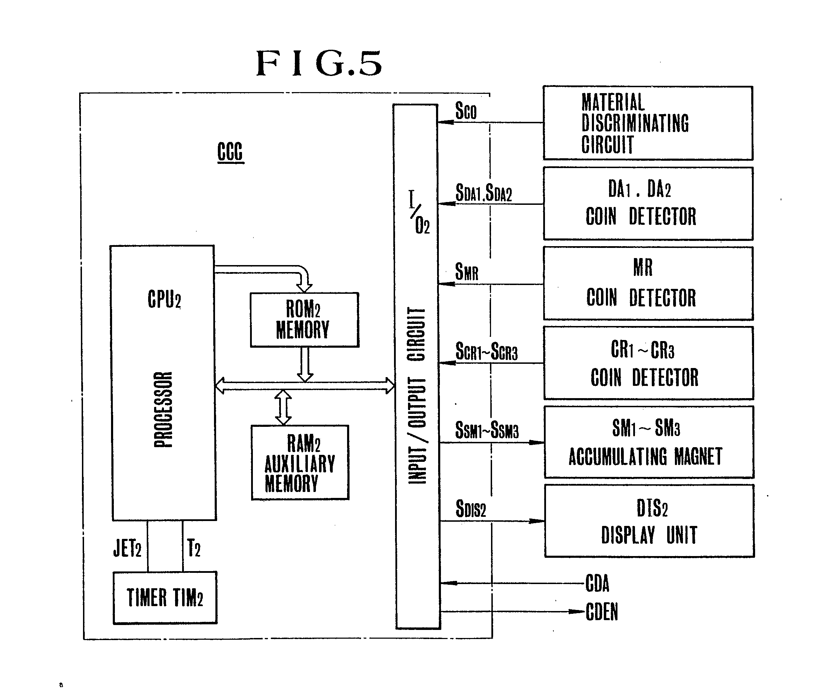

Figure 5 is a block diagram showing the construction of the coin processing circuit CCC and the signal inputted to and outputted therefrom. Like Figure 3, the coin processing circuit CCC is constituted by a processor CPU2, such as a microprocessor, a memory device ROM2, an auxiliary memory device RAM2, an input/output circuit I/O2 and a timer TIM2. The operations of the memory devices ROM2 and RAM2 are the same as those shown in Figure 3.

The parts to be examined are the material discriminator CO, the coin detector DA1, DA2, MR and CR1 to CR3 and the signal CDA generated by the control circuit MCC, and program stored in the memory device ROM2 corresponds to the parts or point to be examined. When the source circuit PW is energized an initial state like that of the control circuit MCC is set and immediately thereafter, the processor CPU2 stars to read out the program of the memory device ROM2 to sequentially detect faults at respective points to be examined according to the program.

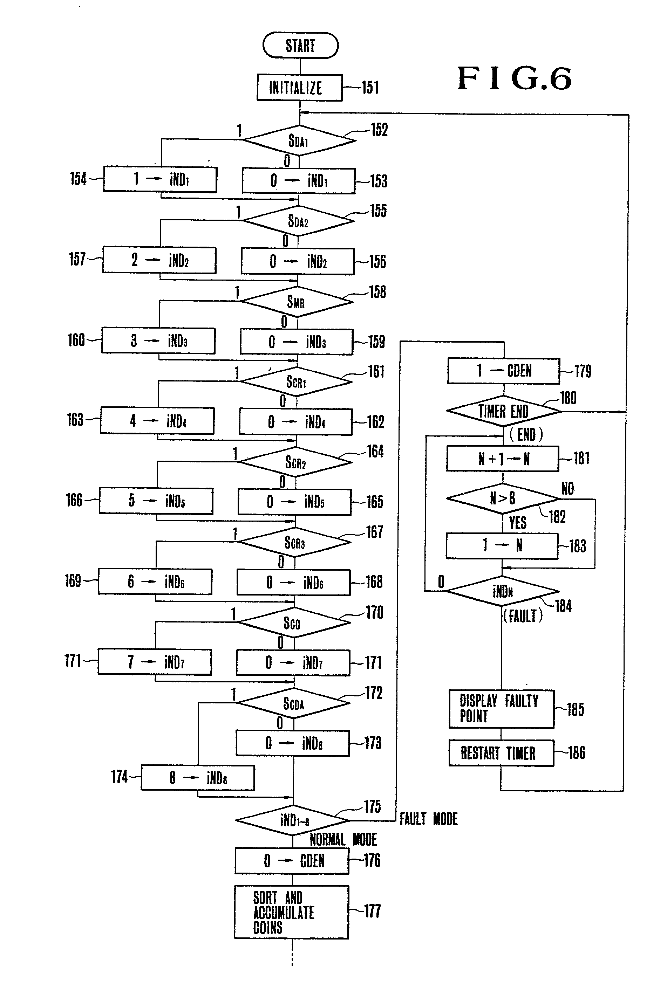

Figure 6 shows the flow chart of successive steps of detecting faults effected by the coin processing circuit CCC. Thus, at step 151, the processor CPU2 initializes the setting to the initial state. More particularly, when the source circuit PW is closed, the processor CPU2 of the coin processing circuit CCC clears all addresses of the auxiliary memory device RAM2 and at the same time the outputs $S_{SM1}$ to $S_{SM3}$ and $S_{DIS2}$ to the reset state that is "0" state through the input/output circuit I/O2, thus establishing the initial state. Also the processor CPU2 sends a set signal SET2 to the timer TM2 to cause it to start. Futhermore, at this time, the processor CUP2 designates an address iND0 of the auxiliary memory device RAM2. After the CPU2 has initialized to the initial state at step 151, the states of respective coin detectors DA1, DA2, MR and CR1 to CR3 are sequentially latched at steps 152 to 169.

More particularly at step 152, the CPU2 is supplied with the output $S_{DA1}$ of the coin detector DA1 via the input/output circuit I/O2 and latches the output $S_{DA1}$. Since the initial state has just been set at this time, any coin has not yet been inserted so that the output of this detector DA1 would be "0". Then, the program is advanced to step 153 to store a code [0] in the address iND1 of the auxiliary memory device RAM2 by judging the state as the normal state. On the other hand, when the detector output $S_{DA1}$ is "1", it is judged that a fault exists showing the clogging of the coin passageway, or a fault of the luminous or light receiving element comprising the detector DA1. Then the program is advanced to step 154 to store [1] in the address iND1.

Upon completion of this storing operation, the program of CPU2 is advanced to step 155 to latch the output $S_{DA2}$ of the coin detector DA2 just in the same manner as the output $S_{DA1}$ of the coin detector DA1. Thereafter, the outputs of coin detectors MR, CR1 to CR3 are latched at steps 158, 161, 164, and 167 respectively.

At this time, the judgement is made by considering that the outputs of all coin detectors are "0" because no coin has been inserted immediately after the setting of the initial state and so long as the signals $S_{DA2}$, $S_{MR}$, $S_{CR1}$ to $S_{CR3}$ produced by the coin detectors DA2, MR, CR1 to CR3 are "0", codes [0] are stored in addresses iND1 to iND6 of the auxiliary memory device RAM2 at steps 156, 159, 162, 165 and 168 respectively under the normal state.

If there is a code detector output of "1" it is judged that luminous elements or light receiving elements comprising the coin detectors DA1, DA2, MR, CR1 to CR3 are defective, or a coin passageway is clogged by coins and codes [2] to [6] are stored as fault signals in addresses iND2 to iND6 at steps 157, 160, 163, 166 and 169 respectively.

Then at step 170, the signal $S_{CO}$ from the material discrimator CO is checked, and the condition in which there is no coin judged as the normal state. When the signal $S_{CO}$ is "0", at step 171, a code "0" is stored in the address iND7 of the auxiliary memory device RAM2, whereas when the signal $S_{CO}$ is "1", it is judged that there is a fault and a code [7] is stored in the address iND2 as a fault signal at step 171.

Then at step 172, the signal CDA from the control circuit MCC is checked and when it is "0" a code [0] is stored in the address iND8 of the auxiliary memory device RAM2 whereas when the signal CDA is "1", a code [8] is stored in the address iND8 at step 174 in the same manner as above described.

As above described, after detecting faults by checking various points to be examined, at step 175, the contents in respective addresses iND1 to iND8 are read out. When all codes are 0 it is judged that there is no fault and the program is advanced to step 176. If there is any one of the codes [1] through [8], it is judged that there is fault and the mode is transferred to the "fault mode". At step 175, if it is judged that there is a fault, the program is advanced to step 179 to send a signal CDEN of [1] to the control circuit MCC. Then, at step 180 a judgement is made as to whether the timer TIM2 is sending a signal T2 or not. If the signal T2 is not being sent out the program is returned to step 152, whereas when the timer TIM2 sends out the signal T2, the program is advanced to step 181. The processings made at steps 181 to 184 are the same as those of the steps 139 to 142 shown in Figure 4 except that at step 182 a judgement is made as to whether N is larger than 8 or not. At step 184, the contents of addresses iND1 to iND8 which the information regarding the presence or absence has been stored are read out sequentially by using the contents N of the counter address. If there is any one of the codes [1] to [8] regarding the fault in any one of the addresses a signal $S_{DIS2}$ corresponding to the code is sent out to display the fault by the display unit DIS2 at step 185. The display unit DIS2 sequentially and individually displays the faults at various points to be examined allocated to the coin processing circuit CCC at each definite time, but the faults allocated to the control circuit MCC are displayed simultaneously by a digit corresponding to code [8]. This display unit DIS2 is usually used for the purpose of maintenance, so that it should be understood that it is incorporated into a telephone set.

Where it is judged that there is no fault, the mode is transferred to the normal mode, and at step 176 after sending a signal CDEN to the control circuit MCC as a code [0], the step is advanced to step 177 to accomplish the sorting and the accumulation of the coins.

The display of the fault of the coin processing circuit CCC on the side of the control circuit MCC is performed only when any one of the codes [1] to [A] of the fault signals is not stored in any one of the addresses iND1 to iNDA of the auxiliary memory device RAM1 of the control circuit MCC so that when a fault occurs on only the side of the control circuit MCC but no fault occurs on the side of the coin processing circuit CCC the fault information on the side of the control circuit MCC is transmitted to the side of the coin processing circuit CCC and judged as a portion of the fault. As a consequence, the signal CDEN is set to the control circuit MCC from the coin processing circuit CCC whereby the control circuit MCC is prevented from displaying a fault when there is no fault on the side of the coin processing circuit CCC. This operation is repeated during a predetermined interval in the same manner as in the control circuit.

After the mode has been transferred to the "normal mode" the processor CPU2 judges the genuine or counterfeit of the coins according to the coin sorting and accumulating programs of the memory device ROM2 and based on the signals $S_{CO}$, $S_{DA1}$, $S_{DA2}$ and $S_{MR}$ generated by the material discriminator CO and the coin detectors DA1, DA2, MR and CR1 to CR3 respectively to send signals $S_{SM1}$ to $S_{SM3}$ to the accumulating magnets SM1 to SM3 to energize the same to drive the accumulating levers 4 to 6 thus storing the coins according to their type.

After transferring to the "normal mode" the control circuit MCC sends signals $S_{RM}$, $S_{CM1}$ to $S_{CM3}$ shown in Figure 3 and to the return preventing magnet RM and the collecting magnets CM1 to CM3 in accordance with the signals $S_{CP}$, $S_{CR1}$ to $S_{CR3}$, $S_{CC1}$ to $S_{CC3}$, $S_{CK1}$ to $S_{CK3}$ from the rate signal receiving circuit CP, and the coin detectors CR1 to CR3, CC1 to CC3 and CK1 to CK3. Consequently magnets RM and CM1 to CM3 are energized to preferentially collect the low price coins according to a signal $S_{CP}$ produced by detecting the rate signal and to send a signal $S_{CU}$ to operate the accumulating counter CUT. The hook switch H produces a "0" signal $S_H$ when the handset is hooked-on at the time of termination of the speech to return the remaining coin. The confirmation of the coin collection operation and the calculation of the number of the accumulated coins are made by the processor CPU1 of the control circuit MCC according to the coin collection program of the memory device ROM1. A signal $S_{PW}$ is sent to the source circuit PW to apply power for a predetermined interval after hook-on thus continuing the operation of various circuits.

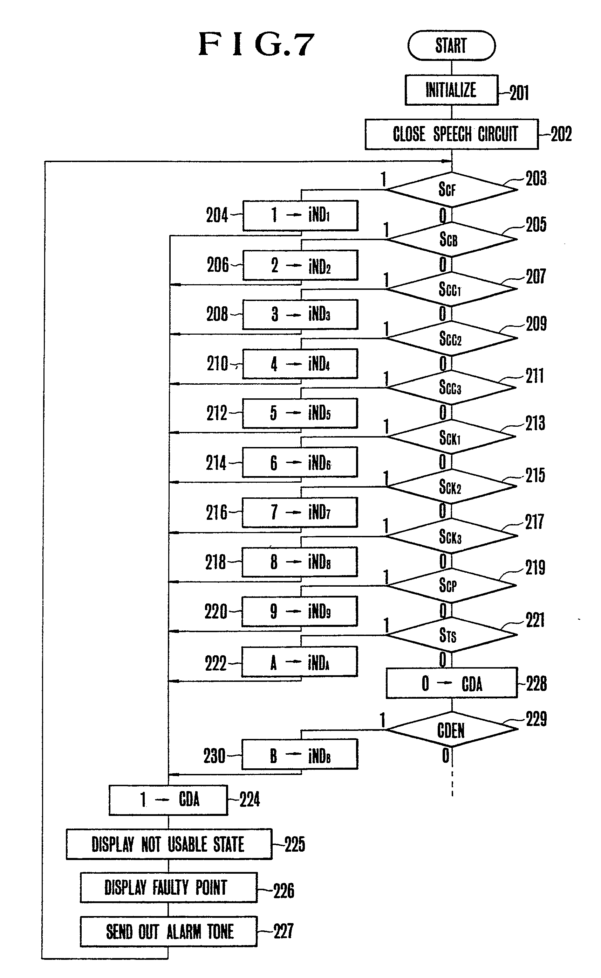

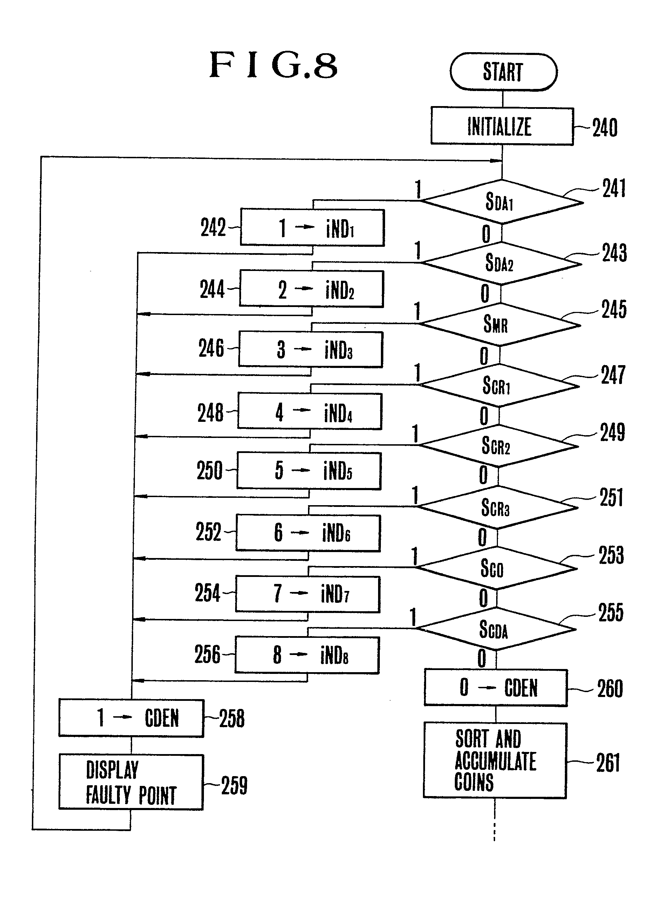

Figures 7 and 8 are flow charts showing various steps for detecting faults. Like Figure 4, at step 201 shown in Figure 7, initialization of the control circuit MCC shown in Figure 3 is made and then the speech circuit is closed at step 202. Then at steps 203, 205, 207, 209, 211, 213, 215, 217, 219 and 221 outputs $S_{CF}$, $S_{CB}$, $S_{CC1}$, $S_{CC2}$, $S_{CC3}$, $S_{CK1}$, $S_{CK2}$, $S_{CK3}$, $S_{CP}$ and $S_{TS}$ produced at respective examination points are checked sequentially. When it is judged that any one of the examination points is faulty, a corresponding one of the codes [1] to [A] is stored in one of the addresses iND1 to iNDA of the auxiliary memory device RAM1 at steps 204, 206, 208, 210, 212, 214, 216, 218, 220 and 222. Then the mode is transferred to the "fault mode" without checking the next examination points. At step 224, the CPU1 sends a signal CDA of code [1] to the coin processing circuit CCC.

At step 225, a signal $S_{DIS1}$ is sent to cause the display unit DIS2 to display the not usable state. Then, at step 226 the display unit DIS1 is caused to display only the firstly detected faulty point. Thereafter, at step 227, a signal $S_T$ is sent to the alarm tone send out circuit WT to operate an alarm. Then the program is advanced to step 203 to repeat the operation described above.

Where the loop current detection signal $S_{TS}$ was found to be normal at step 221, the program is advanced to step 228 to send a signal CDA to the coin processing circuit CCC as a code [0]. Then, at step 229, the signal from the coin processing circuit CCC is checked and when it is a code [0] it is judged that there is no fault on the side of the coin processing circuit so as to transfer the mode to the "normal mode" to execute various control operations necessary for the inherent performances of the telephone set. At step 229 when signal CDEN is judged as code [1] it is judged that there is a fault on the side of the coin processing circuit and the step is advanced to step 230 to store code B in the address iNDB of the auxiliary memory device RAM1 as a fault signal. This information is also used as a portion of the "fault mode" so that the step is transferred to step 224.

With the processing described above, only when the first fault is recovered the check of the next examination point is performed.

Figure 8 shows a flow chart showing steps of detecting faults on the side of the coin processing circuit CCC in which only the firstly detected fault is displayed like Figure 7.

When the source is connected, the processor CPU2 of the coin processing circuit CCC initializes the control circuit at step 240, and then the states of various examining points that is the outputs $S_{DA1}$, $S_{DA2}$, $S_{MR}$, $S_{CR1}$, $S_{CR2}$, $S_{CR3}$, $S_{CO}$ and $S_{CUA}$ are checked successively at steps 241, 243, 245, 247, 249, 251, 253 and 255. When any one of these outputs is judged a fault, corresponding codes [1] to [8] are stored in addresses iND1 to iND8 of the auxiliary memory device RAM2 at steps 242, 244, 246, 248, 250, 254 and 256, and the mode is immediately transferred to the "fault mode" without executing the step of the next examining point. At step 258, the CPU2 sends a signal CDEN of code [1] to the MCC, and at step 592, a signal $S_{DIS2}$ is sent to the display unit DIS2 to display the faulty point. Thereafter the step is returned to step 241 to repeat the above described operation.

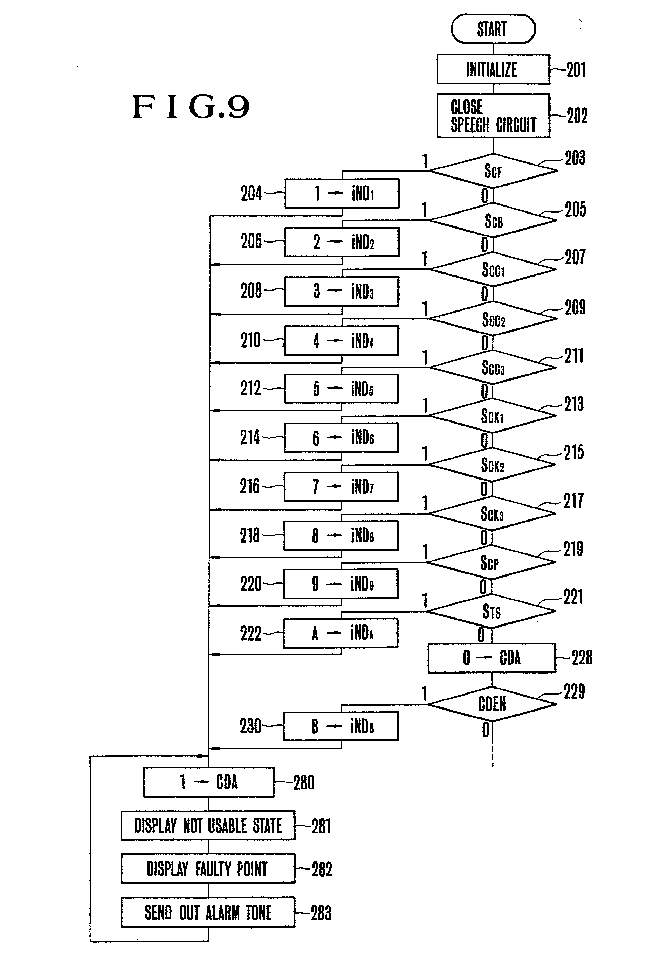

Figure 9 is a flow chart showing the steps of executing the detection of faults of the control circuit MCC just in the same manner as in Figure 7. The basic operation of the flow chart is the same as that of Figure 7, and like parts are designated by the same reference numerals. However, once the mode is transferred to the "fault mode" this mode is maintained, the display of the faulty point is continued irrespective of the recovering of the fault, and the display is reset only when the power source is disconnected by hook-off. More particularly, during the "fault mode" the step is advanced to step 281 so that CPO1 sends a signal CDA of code [1] to the coin processing circuit CCC and then at step 281 not usable state is displayed by the display device DIS1. Then the step is advanced to step 282 to display a fault by the display unit DIS1. Then at step 283 an alarm tone is sent out from the handset of the SPC via circuit WT and the step is returned to step 280.

The programs shown in Figures 7, 8 and 9 can reduce the number of steps relative to those shown in Figures 4 and 6 and can thus simplify the programs as well as the capacities of ROM1 and ROM2.

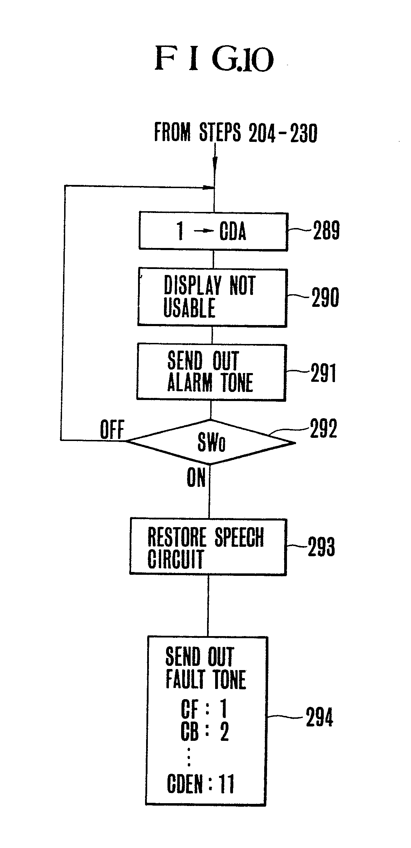

Figure 10 shows a modification of Figure 7 and in which as the processings up to the "fault mode" is the same as those shown in Figure 7 they are omitted. Upon occurrence of a fault at any point to be examined the mode is transferred to the "fault mode" so that the CPU1 sends a signal COA of code [1] to the coin processing circuit and then at step 290 the not usable state is displayed by the display unit DIS1.

Then, at step 291 the handset of the speech circuit SPC sends an alarm tone via the alarm tone send out circuit WT. Then the program is advanced to step 292 to check the state of the manually operated switch SWO and when this switch is open the step is returned to step 290, whereas when the switch SWO is closed, at step 293, the relay GS is deenergized to interrupt and restore the speech circuit for the purpose of preventing the dial tone from being mixed with a fault tone as will be described hereinafter.

Then the program is advanced to step 294 and a predetermined interval after restoring the speech circuit, the urging tone oscillator in the alarm tone send out circuit WT is driven to cause the handset in the speech channel to send out a fault tone. At this time, the signal CF is code [1]. At this time, the number of fault tones varies as the CC1 to CDEN and the faulty portion vary. For example, when signal CF is "1", a tone having a duty ratio of 1 and a period of 2 second is generated once, while when the signal CB is "1", the tone is generated twice. With this system it is possible to identify the faulty point by the number of the generated tone.

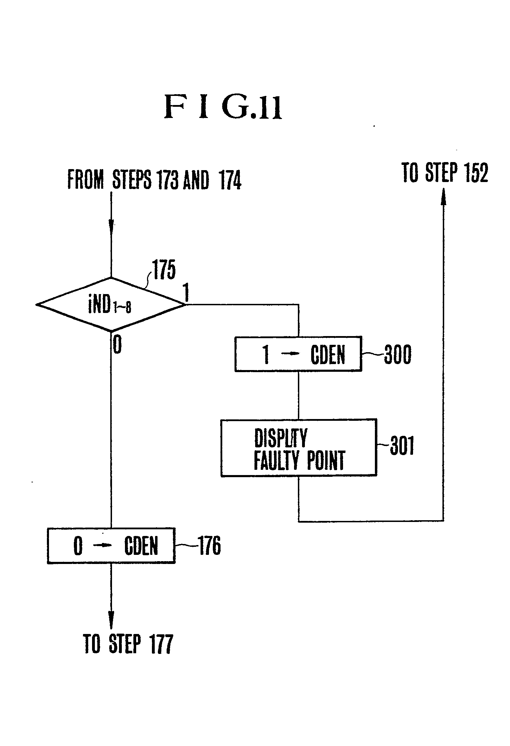

Figure 11 is a flow chart of a program wherein the coin processing unit DIS2 of the coin processing unit CCC comprises such luminous elements as luminous diodes for respective bits of the display drive signal $S_{DIS2}$. This flow chart is analogue to that shown in Figure 6 except that the steps for displaying the fault is simplified. More particularly, in the flow chart shown in Figure 6, the contents in the addresses iND1 to iND8 at the auxiliary memory RAM1, are read out and where there is a fault the mode is transferred to the "fault mode" at step 300 the CPU2 sends a signal CDEN of code [1] to the control device MCC and then at step 301 the display unit DIS2 displays the faulty point. Thereafter, the program is returned to step 156 shown in Figure 6 to repeat the same operation.

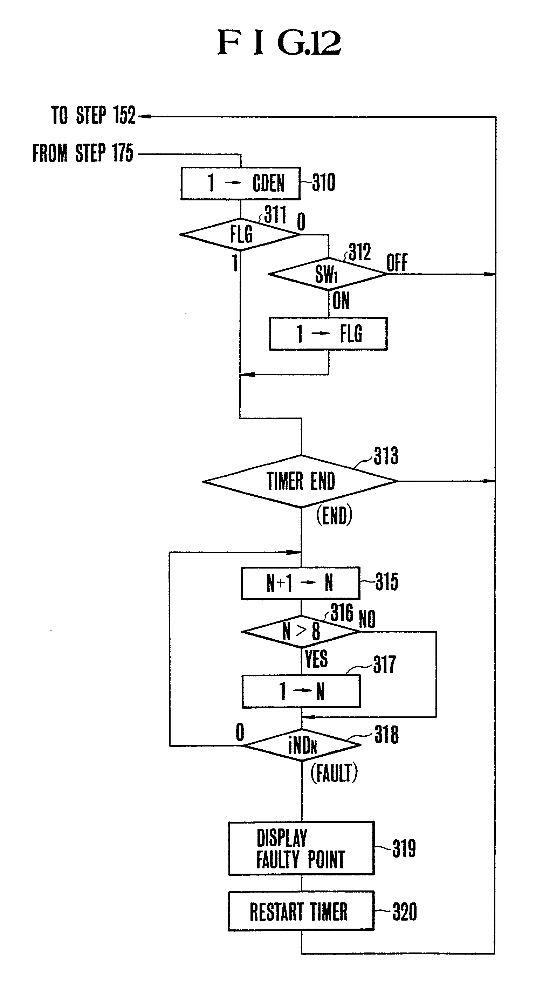

Figure 12 is a flow chart of a program in which the fault display device of the coin processing circuit CCC is operated by the non-locking type manual switch SW1. Thus, when the switch SW1 is closed, a display flag FLG is set to perform the same display of a faulty point just in the same manner as in Figure 6, whereby the drive power of the display unit DIS2 can be reduced.

More particularly, by executing the steps corresponding to those shown in Figure 6 the contents of the addresses iND1 to iND8 of the auxiliary memory devices iND1 to iND8 are read out. If there is a fault, the mode is transferred to the fault mode and the step is advanced to the step 310 shown in Figure 12, and the CPU2 sends a signal CDEN of code [1] to the control circuit MCC. Then at step 311 a judgement is made as to whether the display flag FLG has been set or not. If the flag FLG is set ("1") the step is advanced to step 313, whereas if the flag is not set the step is advanced to step 312 to check whether the switch SW1 is open or closed. At this time, if the switch SW1 is open, the program is returned to step 152 shown in Figure 6, whereas if the switch SW1 is closed the flag is set to "1" and the step is advanced to step 313 to check whether the timer TIM2 is producing a signal T2 or not. The succeeding steps 315 to 320 correspond to steps 181 to 186 shown in Figure 6 so that their description is believed unnecessary.

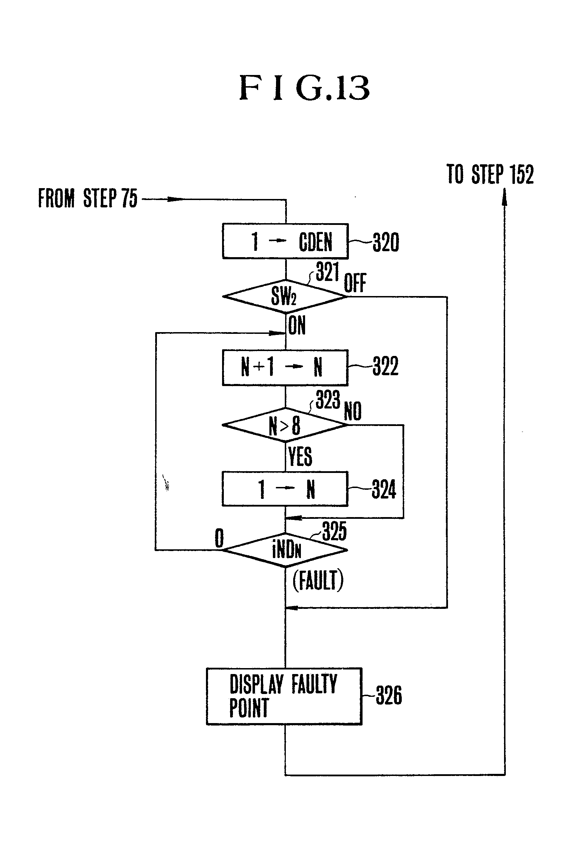

Figure 13 shows a flow chart of a program in which the display of the faults on the side of the coin processing circuit CCC is renewed each time the manually operated not latch type switch SW2 is closed. With this program, whenever the switch is closed a fault is displayed and since this display is continued until the switch is closed again it is convenient to check and repair the faulty points successively.

More particularly, when a fault occurs at step 175 shown in Figure 6, the mode is transferred to the "fault mode". Then at step 320, the CPU2 sends a signal CDEN of code [1] to advance to step 321 at which the not latched type switch SW2 (see Figure 2) is closed or not. When the switch S2 is open the step is advanced to step 326 whereas if it is closed the step is advanced to step 322, and processings corresponding to those of step 181 through 184 shown in Figure 6 are executed at steps 322 through 325. When a fault is detected at step 325, it is displayed by the display unit DIS2 at step 326. Thereafter the step is advanced to step 152.

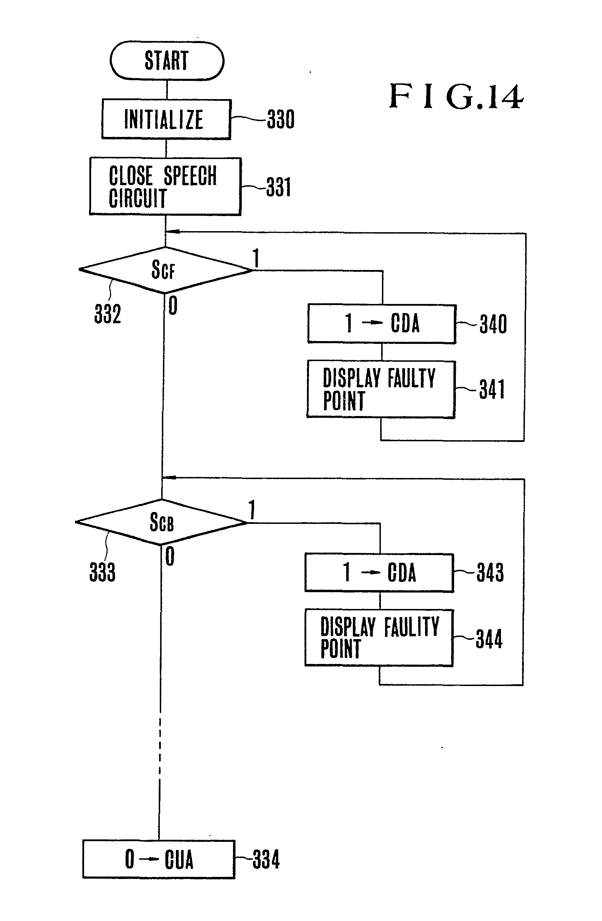

Figure 14 shows a portion of the program of the control circuit MCC in when a point to be examined is judged normal, no check would be made thereafter and when only a point is judged faulty it is checked repeatedly. This modification can decrease the check time than a program in which respective points are checked repeatedly to display faulty points.

More particularly, like Figure 4, the CPU1 of the control circuit MCC performs initialization and after closing the speech circuit at step 331, the signal $S_{CF}$ from the accumulating counter are checked at step 332. At this time, since the coin may be inserted, if the signal is "0", the signal $S_{CB}$ from the coin box mounting switch CB is checked at step 333. If the circuit is normal the same points to be examined as those of Figure 4 are checked. When all points are normal a signal CDA of code [0] is sent to the coin processing circuit CCC. Thereafter, the same process steps as in Figure 4 are executed. On the other hand when signal $S_{CF}$ of "1" were obtained at step 332, the mode is transferred to the "fault mode" and the step is advanced to step 340.

After the CPU1 has sent a signal CDA of [1] to the processing circuit CCC at step 340, a faulty point is displayed by the display unit DIS1 at step 341. Then the program is advanced to step DIS1 to display the faulty point. Then at step 332, the check is repeated. Only after the fault has been cleared, the step is advanced to the next step 333. At this step when a fault occurs, the CPU1 sends a signal CDA of code [1] to display the fault at step 344. Then the step is returned to step 333 to execute the checking operation described above.

Although in Figures 6 to 14, only the side of the control circuit MCC of the coin control circuit was shown, similar execution operation can also be made on the other side.

As above described, according to this invention, since the handset is hooked-off self diagnosis is made according to a prescribed program and since a fault is informed to the user by the display unit DIS1 or by sending out an alarm tone when the user hooks off prior to the use of the public telephone set he is immediately informed of the presence or absence of the fault. In addition, since displays of different faulty points are made independently, the maintenance and inspection of the faulty points can be made very easily.

Furthermore, detection of the fault is made concurrently with the closure of a loop circuit closed by hooking-off, breakage or short circuiting of all circuits including telephone lines and a telephone exchange can also be detected.

While in the foregoing description, conventional material discriminator CO, the coin detectors DA1, DA2, CR1 to CR3, CC1 to CC3, CK1 to CK3 and MR have been used, sensors exclusively used for examination can also be provided. Although a preloop type telephone set has been described in which a loop circuit is immediately formed when the handset is hooked off, the invention is also applicable to a point loop type telephone set in which the loop circuit is closed when a coin is inserted. The same operation can also be made when the source is constantly connected to various circuits and when the operations of the processor CPU1 and CPU2 are initiated upon hook-off. However, when the source circuit PW is energized when the handset is hooked off, the power consumption can be reduced.

Although it is usual a extinguish the display of the faulty portion and the not usable state by hook-on operations, these displays may be made only for a definite interval. When the not usable state is displayed by a display device provided with such holding means as a permanent magnet or a latch mechanism, and not usable state is displayed when a first user hooks-off so that the next and succeeding users can know the faulty state without hooking off. If desired, instead of providing the display devices DIS1 and DIS2 for the telephone set, a plug-in type display device may be used. With this modified display system, the fault at any point can be displayed by inserting a plug into a jack.

Instead of utilizing independent control circuit MCC and a coin processing circuit CCC, where a microprocessor is used as processors CPU1 and CPU2, two processors may be used in parallel if their number of terminals and the processing capacity permit. This is advantageous to simplify the peripheral circuits and reduce the cost of manufacturing. Where a large processor is used only one is suffice.

As can be noted from the foregoing description, according to this invention, the presence or absence of a fault in a public telephone set can be self diagnosed by mere hooking off operation to display fault to the user as well as the faulty point to the maintainance man and operator, thus preventing use of a faulty telephone set.

Moreover, as the maintainance man can readily know faulty points by hooking off and closing of the maintenance switch, the faulty point can be confirmed at once, whereby it is possible to make suitable repair without performing any inspection. For this reason, the repair man can judge at once whether he can repair in the field or should bring the faulty telephone set to a repair shop. The same advantage can also be realized in the examination of completed telephone sets in a manufacturing factory.

**Claims**

1. A public telephone set comprising

a telephone circuit connected to office lines (LTB) and including
a handset having a transmitter and a receiver,
a dial signal transmitter (Di),
a rate signal receiving circuit (CP), and
a speech control circuit including a hook switch (H) adapted to complete a speech loop
a coin unit, including a coin box (15), for sorting, accumulating and collecting different sorts of coins:

a control means (MCC, CCC) including a processing means and a memory means for controlling the sorting, accumulation and collection of coins and for controlling the operation of said telephone circuit, and a detecting means including sensors for detecting the presence of coins in the coin unit after the handset is lifted, characterized in that said memory means (ROM 1, ROM 2) of the control means (MCC, CCC) includes a program for executing a fault self-diagnosing operation under the control of the control means, and in that said public telephone set further comprises a start control means interlocked with said hook switch (H) for controlling the starting of the operation of the control means in accordance with the program stored in the memory means, and additional detector comprising a part of said detecting means and for detecting the state of the telephone circuit, which indicates whether or not the telephone circuit is operable in a normal manner, and an indication device (DS1, DS2) disposed to be observable by the user of the set, in that immediately after the handset is lifted and before a normal telephone operation is started, the control means (MCC, CCC) executes the fault self-diagnosing program stored in the memory means in such a way that the control means (MCC, CCC) subsequently checks whether or not the outputs of said detecting means are in normal states, in that if one of the outputs of said detecting means disagrees with reference outputs which are in normal states, the control means (MCC, CCC) sends a fault indicating signal to the indication device (DIS1, DIS2) indicating the presence of a fault, and sends a disabling signal to the speech control circuit (TCC) which prevents the starting of services of the public telephone set, and in that, if all the outputs of said detecting means agree with the reference outputs, the control means (MCC, CCC) gives an enabling signal for the starting of services of the public telephone set.

2. The public telephone set according to claim 1 wherein said control means (MCC, CCC) includes means (DS1, DS2) for causing the presence of the fault to be displayed over a definite interval.

3. The public telephone set according to claim 1 wherein said control means (MCC, CCC) includes means (DS1, DS2) for causing the presence of the fault to be displayed while said handset is being hooked-off.

4. The public telephone set according to claim 1 wherein said control means (MCC, CCC) includes means (DS1, DS2) for causing the presence of the fault to be displayed after hooking on of said handset.

5. The public telephone set according to claim 1 which further comprises a memory device (RAM1, RAM2) which stores an information regarding a detected fault, and display means (DIS1) for displaying a faulty point according to an output of said memory device.

6. The public telephone set according to claim 5 which further comprises a manually operated switch (SW0) for controlling display of said display means (DIS1).

7. The public telephone set according to claim 1 which further comprises a source of power (PW) for applying operating power to said control means (MCC, CCC) said sensors (CO, DA, MR, CR, CC, CK) and said memory device (ROM1, RAM1), and means interlocked with said hook switch (H) for controlling said source of power (PW).

8. The public telephone set according to claim 1 which further comprises a memory device (RAM1) for storing an information regarding a detected fault, and means for producing a tone that can discriminate the detected fault in accordance with the output of said memory device.

9. The telephone set according to any one of the claims 1 to 8 wherein the checked sensors include a speech loop current detector associated to the speech control circuit (TTC), a rate signal detector associated with the rate signal receiving circuit (CP), an accumulating counter (CUT) of the coin box (15) and a read switch (CB) mounted on the coin box (15).

**Patentansprüche**

1. Öffentlicher Münzfernsprecher mit einer an die Amtsleitungen (LTB) angeschlossenen Fernsprechschaltung, mit einem ein Mikrofon und einen Höhrer aufweisenden Handapparat, einem Wählsignalübertrager (Di), einem Gebührensignalempfängerkreis (CP), einem Sprechsteuerkreis (TCC) mit einem Gabelumschalter (H), über den ein Sprechkreis geschlossen werden kann, einer Münzeinheit mit einem Münzbehälter (15) zur Aufnahme, zum Sortieren und Sammeln unterschiedlicher Münzsorten, einer Steuervorrichtung (MCC, CCC) die eine Datenverarbeitungseinheit und eine Speichervorrichtung aufweist, zur Steuerung des Aufnahme-, Sortier- und Sammelvorganges der Münzen und zur Steuerung der Fernsprechschaltung und mit einer Sensoren aufweisenden Abtasteinrichtung zum Feststellen, ob Münzen in der Münzeinheit vorhanden sind, nachdem der Handapparat abgenommen wurde, dadurch gekennzeichnet, daß die Speichervorrichtung (ROM 1, ROM 2) der Steuervorrichtung (MCC, CCC) ein Programm zur Durchführung eines Fehler-Selbstdiagnosevorganges unter Steuerung der Steuervorrichtung umfassen, daß eine mit dem Gabelumschalter (H) verbundene Start-Steuervorrichtung zur Steuerung des Beginns der Funktion der Steuervorrichtung in Übereinstimmung mit dem in der Speichervorrichtung gespeicherten Programm, daß ein zusätzlicher Sensor als Teil der Abtasteinrichtung zum Feststellen des Zustandes der Fernsprechschaltung vorgesehen ist, der anzeigt, ob die Fernsprechschaltung in der üblichen Weise betrieben werden kann, daß eine sichtbar für den Benutzer angeordnete Anzeigevorrichtung (DIS 1, DIS 2) vorgesehen ist, und daß unmittelbar nachdem der Handapparat abgehoben und bevor der übliche Fernsprechvorgang eingeleitet wird, die Steuervorrichtung (MCC, CCC) den Fehler-Selbstdiagnosevorgang in der Weise durchführt, daß überprüft wird, ob die Ausgänge der Abtasteinrichtung im üblichen Zustand sind, wobei bei Nichtübereinstimmen mindestens einer der Ausgänge mit den den üblichen Zustand angebenden Referenzausgängen die Steuervorrichtung (MCC, CCC) eine Fehleranzeigesignal an die Anzeigevorrichtung (DIS 1, DIS 2) abgibt und ein Sperrsignal an den Sprech-Steuerkreis (TCC) sendet, durch das der Beginn des Gebrauches als üblicher öffentlicher Fernsprechapparat unterbunden wird, und daß bei Übereinstimmung aller Ausgänge der Abtasteinrichtung mit den Referenzausgängen die Steuervorrichtung (MCC, CCC) ein Freigabesignal für den Beginn des Gebrauches als öffentlicher Fernsprechapparat abgibt.

2. Münzfernsprecher nach Anspruch 1, dadurch gekennzeichnet, daß die Steuervorrichtung (MCC, CCC) eine Anzeigeeinrichtung (DIS 1, DIS 2) aufweist, die das Vorhandensein des Fehlers über einen bestimmten Zeitraum anzeigt.

3. Münzfernsprecher nach Anspruch 1, dadurch gekennzeichnet, daß die Steuervorrichtung (MCC, CCC) Anzeigevorrichtungen (DIS 1, DIS 2) umfaßt, die das Vorhandensein des Fehlers solange anzeigen, wie der Handapparat abgenommen ist.

4. Münzfernsprecher nach Anspruch 1, dadurch gekennzeichnet, daß die Steuervorrichtung (MCC, CCC) Anzeigevorrichtungen (DIS 1, DIS 2) umfaßt, die das Vorhandensein des Fehlers auch nach dem Auflegen des Handapparates anzeigen.

5. Münzfernsprecher nach Anspruch 1, dadurch gekennzeichnet, daß weiterhin eine Speichervorrichtung (RAM 1, RAM 2), die die Informationen hinsichtlich eines aufgefundenen Fehlers speichert und ein Display (DIS 1) für die Anzeige des Fehlers entsprechend einem Ausgang der Speichervorrichtung vorgesehen sind.

6. Münzfernsprecher nach Anspruch 5, dadurch gekennzeichnet, daß ein manuell betätigbarer Schalter (SWO) vorgesehen ist, der die Anzeige des Displays (DIS 1) steuert.

7. Münzfernsprecher nach Anspruch 1, dadurch gekennzeichnet, daß weiterhin eine Versorgungsquelle (PW) vorgesehen ist, die die Steuervorrichtung (MCC, CCC), die Sensoren (CO, DA, MR, CR, CC, CK) und die Speichervorrichtung (ROM 1, RAM 1) mit Spannung versorgen und daß mit dem Gabelumschalter (H) verbundende Mittel zur Steuerung der Versorgungsquelle (PW) vorgesehen sind.

8. Münzfernsprecher nach Anspruch 1, dadurch gekennzeichnet, daß eine Speichervorrichtung (RAM 1), die die Information über einen aufgefundenen Fehler speichert, und eine Vorrichtung zur Abgabe eines akustischen Signals vorgesehen sind, durch die abhängig vom Ausgang der Speichervorrichtung der aufgefundene Fehler unterschieden werden kann.

9. Münzfernsprecher nach einem der Ansprüche 1 bis 8, dadurch gekennzeichnet, daß die überwachten Sensoren einen mit dem Sprech-Steuerkreis (TTC) verbundenen Sprechkreis Stromsensor, einen mit dem Gebührensignal - Empfängerkreis (CP) verbundenen Gebührensignalsensor, einen mit dem Münzbehälter (15) verbundenen Additionszähler (CUT) und einen an dem Münzbehälter (15) angeordneten Zungenschalter (CB) umfassen.

**Revendications**

1. Appareil téléphonique public comprenant un circuit téléphonique raccordé aux lignes de bureau (LTB) et comprenant

un appareil manuel pourvu d'un émetteur et d'un récepteur,
un émetteur de signaux à cadran (Di),
un circuit de réception de signaux de cadence (CP) et
un circuit de commande de la conversation, comprenant
un disjoncteur à manche (H).

disposé pour compléter un circuit de conversation,

un élément à pièces de monnaie, comprenant une boîte à monnaie (15) pour le triage, la réception et la collecte de différentes espèces de pièces de monnaie:
un dispositif de commande (MCC, CCC) comprenant un dispositif de traitement et un dispositif à mémoire pour commander le triage, la réception et la collecte des pièces de monnaie et pour commander le fonctionnement du dit circuit téléphonique et un dispositif de détection comprenant des détecteurs, permettant de détecter la présence de pièces de monnaie dans l'élément à pièces de monnaie après soulévement de l'écouteur, caractérisé en ce que ledit dispositif à mémoire (ROM 1, ROM 2) du dispositif de commande (MCC, CCC) comprend un programme pour réaliser une opération d'auto-diagnostic des défauts, sous le contrôle du dispositif de commande, en ce que ledit appareil téléphonique public comprend, en outre, un dispositif de commande du démarrage, interconnecté au dit disjoncteur à manche (H) pour commander le démarrage du fonctionnement du dispositif de commande, conformément au programme stocké dans le dispositif à mémoire et un détecteur supplémentaire comprenant une partie du dit dispositif de détection et permettant la détection de l'état du circuit téléphonique qui indique si le circuit téléphonique peut être utilisé ou non d'une manière normale, et un indicateur (DIS1, DIS2), disposé de façon à pouvoir être observé par l'utilisateur de l'appareil par le fait que, immédiatement après le soulèvement de l'écouteur et avant le début du fonctionnement normal du téléphone, ledit dispositif de commande (MCC, CCC) exécute le programme d'auto-diagnostic des défauts stocké dans le dispositif à mémoire, de façon à ce que le dispositif de commande (MCC, CCC) vérifie ensuite si les sorties du dit dispositif de détection sont dans un état normal ou non, en ce que, si l'une des sorties du dit dispositif de détection ne correspond pas aux sorties de référence qui sont à l'état normal, le dispositif de commande (MCC, CCC) envoie un signal indicateur de défaut à l'indicateur (DIS1, DIS2), ce qui indique la présence d'un défaut, et envoie un signal d'indisponibilité au circuit de commande de la conversation (TCC), qui empêche le début de l'utilisation de l'appareil téléphonique public, et en ce que si toutes les sorties du dit dispositif de détection sont conformes aux sorties de référence, le dispositif de commande (MCC, CCC) donne un signal d'autorisation permettant le démarrage du fonctionnement de l'appareil de téléphone public.

2. Appareil de téléphone public, selon la revendication 1, caractérisé en ce que ledit dispositif de commande (MCC, CCC) comprend des dispositifs (DIS1, DIS2) permettant l'affichage de la présence du défaut pendant un intervalle défini.

3. Appareil de téléphone public selon la revendication 1, caractérisé en ce que ledit dispositif de commande (MCC, CCC) comprend des dispositifs (DIS1, DIS2) pour permettre l'affichage de la présence du défaut pendant que ledit écouteur est décroché.

4. Appareil de téléphone public, selon la revendication 1, caractérisé en ce que ledit dispositif de commande (MCC, CCC) comprend des dispositifs (DIS1, DIS2), permettant l'affichage de la présence du défaut après le raccrochage du dit écouteur.

5. Appareil de téléphone public, selon la revendication 1, caractérisé en ce qu'il comprend, en outre, un dispositif à mémoire (RAM1, RAM2) qui stocke une information relative à un défaut détecté et un dispositif d'affichage (DIS1) pour l'affichage d'un point défectueux, conformément à une sortie du dit dispositif à mémoire.

6. Appareil de téléphone public, selon la revendication 5, caractérisé en ce qu'il comprend, en outre, un interrupteur (SWO) à commande manuelle, pour contrôler l'affichage du dit dispositif d'affichage (DIS1).

7. Appareil de téléphone public, selon la revendication 1, caractérisé en ce qu'il comprend, en outre, une source d'énergie (PW) pour alimenter et permettre le fonctionnement des dits dispositifs de commande (MCC, CCC), des bits détecteurs (CO, DA, MR, CR, CC, CK) et du dit dispositif à mémoire (ROM1, RAM1) et des dispositifs interconnectés au dit disjoncteur à manche (H) pour commander ladite source d'énergie (PW).

8. Appareil de téléphone public, selon la revendication 1, caractérisé en ce qu'il comprend, en outre, un dispositif à mémoire (RAM1) pour le stockage d'une information relative à un défaut détecté et un dispositif pour produire un signal acoustique permettant de distinguer le défaut détecté, conformément à la sortie du dit dispositif à mémoire.

9. Appareil téléphonique, selon l'une quelconque des revendications 1 à 8, caractérisé en ce que les détecteurs contrôlés comprennent un détecteur de courant du circuit conversationnel associé au circuit de commande de conversation (TTC), un détecteur de signal de cadence associé au circuit de réception du signal de cadence (CP), un compteur à totalisation (CUT) de la boîte à pièces de monnaie (15) et un interrupteur à tige (CB) monté sur la boîte à pièces de monnaie (15).

# F I G.1

# F I G. 2

COIN PROCESSING CIRCUIT CCC

DIS2 DISPLAY UNIT

SW1  SW2

COIN SLOT CO

MATERIAL DISCRIMINATOR

COIN DETECTOR

ACCUMULATING MAGNET

COIN DETECTOR

COIN DETECTOR

RETURN PREVENTING MAGNET

COLLECTING MAGNET

COIN DETECTOR

COIN BOX  15

COIN BOX MOUNTING SWITCH

ACCUMULATING CUT COUNTER

COIN RETURNING OPENING  13

CONTROL CIRCUIT MCC

SPEECH CIRCUIT SPC

ALARM TONE SEND OUT CIRCUIT

SPEECH CONTROL CIRCUIT

DIAL Di

RATE SIGNAL RECEIVING CIRCUIT

HOOK SWITCH

POWER SOURCE

TO SOURCE CIRCUIT OF ALL DEVICE

DIS1 DISPLAY UNIT

SW0 SWITCH

LTB

2

# F I G.2A

STS

LIGHT RECEIVING
ELEMENT

FROM Di

DB

Tcc

FROM GS

LUMINOUS
ELEMENT
LED

SS1

FROM SS

DIODE
BRIGE

gS1

PAGING
PROCESSING
CIRCUIT

TO SPC

TO LINE
TERMINAL

0 012 102

# F I G.3

# FIG.4

START

INITIALIZE —101

CLOSE SPEECH CIRCUIT —102

$S_{CF}$ —103

105— $1 \rightarrow iND_1$     $0 \rightarrow iND_1$ —104

$S_{CB}$ —106

108— $2 \rightarrow iND_2$     $0 \rightarrow iND_2$ —107

$S_{CC1}$ —109

111— $3 \rightarrow iND_3$     $0 \rightarrow iND_3$ —110

$S_{CC2}$ —112

114— $4 \rightarrow iND_4$     $0 \rightarrow iND_4$ —113

$S_{CC3}$ —115

117— $5 \rightarrow iND_5$     $0 \rightarrow iND_5$ —116

$S_{CK1}$ —118

120— $6 \rightarrow iND_6$     $0 \rightarrow iND_6$ —119

$S_{CK2}$ —121

123— $7 \rightarrow iND_7$     $0 \rightarrow iND_7$ —122

$S_{CK3}$ —124

126— $8 \rightarrow iND_8$     $0 \rightarrow iND_8$ —125

$S_{CP}$ —127

129— $9 \rightarrow iND_9$     $0 \rightarrow iND_9$ —128

$S_{TS}$ —130

132— $A \rightarrow iND_A$     $0 \rightarrow iND_A$ —131

$iND_{1-A}$ —133

FAULT MODE

$0 \rightarrow CDA$ —134

CDEN —136

137

$B \rightarrow iND_B$

NORMAL MODE

---

$1 \rightarrow CDA$ —134a

DISPLAY NOT USABLE AND SEND OUT ALARM TONE —135

IS $SW_O$ CLOSED?   NO —137

YES

TIMER END —138

(END)

$N+1 \rightarrow N$ —139

$N > B$   NO —140

YES

$1 \rightarrow N$ —141

$iND_N$ —142

(FAULT)

DISPLAY FAULTY POINT —143

RESTART TIMER —144

# FIG.5

0 012 102

0 012 102

FIG.6

7

# F I G.7

START

INITIALIZE —201

CLOSE SPEECH CIRCUIT —202

$S_{CF}$ —203

204— $1 \rightarrow iND_1$

$S_{CB}$ —205

206— $2 \rightarrow iND_2$

$S_{CC_1}$ —207

208— $3 \rightarrow iND_3$

$S_{CC_2}$ —209

210— $4 \rightarrow iND_4$

$S_{CC_3}$ —211

212— $5 \rightarrow iND_5$

$S_{CK_1}$ —213

214— $6 \rightarrow iND_6$

$S_{CK_2}$ —215

216— $7 \rightarrow iND_7$

$S_{CK_3}$ —217

218— $8 \rightarrow iND_8$

$S_{CP}$ —219

220— $9 \rightarrow iND_9$

$S_{TS}$ —221

222— $A \rightarrow iND_A$

$0 \rightarrow CDA$ —228

$CDEN$ —229

230— $B \rightarrow iND_B$

$1 \rightarrow CDA$ —224

DISPLAY NOT USABLE STATE —225

DISPLAY FAULTY POINT —226

SEND OUT ALARM TONE —227

# FIG.8

```
                                          ( START )
                                             │
                                      ┌─────────────┐
                                      │ INITIALIZE  │──── 240
                                      └─────────────┘
                                             │
                      1              ◇               241
                  ┌──────────────── SDA1 ◇
                  │                      0
      ┌──────────────────┐         1     ◇               243
242 ──│   1 → iND1        │   ┌───────── SDA2 ◇
      └──────────────────┘   │               0
                             │         1     ◇            245
      ┌──────────────────┐   │   ┌───────── SMR ◇
244 ──│   2 → iND2        │   │   │               0
      └──────────────────┘   │   │         1     ◇        247
                             │   │   ┌───────── SCR1 ◇
      ┌──────────────────┐   │   │   │               0
246 ──│   3 → iND3        │   │   │   │         1     ◇    249
      └──────────────────┘   │   │   │   ┌───────── SCR2 ◇
                             │   │   │   │               0
      ┌──────────────────┐   │   │   │   │         1     ◇   251
248 ──│   4 → iND4        │   │   │   │   │   ┌───────── SCR3 ◇
      └──────────────────┘   │   │   │   │   │               0
                             │   │   │   │   │         1     ◇  253
      ┌──────────────────┐   │   │   │   │   │   ┌───────── SCO ◇
250 ──│   5 → iND5        │   │   │   │   │   │   │               0
      └──────────────────┘   │   │   │   │   │   │         1     ◇ 255
                             │   │   │   │   │   │   ┌───────── SCDA ◇
      ┌──────────────────┐   │   │   │   │   │   │   │               0
252 ──│   6 → iND6        │   │   │   │   │   │   │   │
      └──────────────────┘   │   │   │   │   │   │   │
                             │   │   │   │   │   │   │    ┌──────────┐
      ┌──────────────────┐   │   │   │   │   │   │   │    │ 0 → CDEN │── 260
254 ──│   7 → iND7        │   │   │   │   │   │   │   │    └──────────┘
      └──────────────────┘   │   │   │   │   │   │   │    ┌──────────┐
                             │   │   │   │   │   │   │    │ SORT AND │
      ┌──────────────────┐   │   │   │   │   │   │   │    │ ACCUMULATE│── 261
256 ──│   8 → iND8        │   │   │   │   │   │   │   │    │ COINS    │
      └──────────────────┘   │   │   │   │   │   │   │    └──────────┘
                                                              ┆
         ┌──────────────┐
         │  1 → CDEN    │── 258
         └──────────────┘
         ┌──────────────┐
         │  DISPLAY     │
         │  FAULTY POINT│── 259
         └──────────────┘
```

# FIG.9

# F I G.10

FROM STEPS 204-230

| | |
|---|---|
| 1 → CDA | 289 |
| DISPLAY NOT USABLE | 290 |
| SEND OUT ALARM TONE | 291 |

OFF ← SW0 (292) → ON

RESTORE SPEECH CIRCUIT — 293

SEND OUT FAULT TONE

CF : 1
CB : 2
⋮
CDEN : 11

— 294

11

# F I G.11

FROM STEPS 173 AND 174

TO STEP 152

175

$iND_{1\sim8}$

1

$1 \rightarrow CDEN$ —300

DISPLY
FAULTY POINT —301

0

$0 \rightarrow CDEN$ —176

TO STEP 177

# F I G.12

TO STEP 152

FROM STEP 175

- $1 \rightarrow$ CDEN — 310
- FLG — 311
- SW$_1$ — 312 / OFF / ON
- $1 \rightarrow$ FLG
- TIMER END — 313 (END)
- $N+1 \rightarrow N$ — 315
- $N > 8$ — 316 NO / YES
- $1 \rightarrow N$ — 317
- iND$_N$ — 318 (FAULT) / 0
- DISPLAY FAULTY POINT — 319
- RESTART TIMER — 320

13

# F I G.13

FROM STEP 75 →

TO STEP 152

$1 \rightarrow$ CDEN — 320

321 — $SW_2$ — OFF

ON

$N+1 \rightarrow N$ — 322

323 — $N>8$ — NO

YES

$1 \rightarrow N$ — 324

0 — 325 — $iND_N$

(FAULT)

DISPLAY FAULTY POINT — 326

# F I G.14

```
        ┌─────────┐
        │  START  │
        └────┬────┘
        ┌────┴─────┐
        │ INITIALIZE│────330
        └────┬─────┘
   ┌──────────┴──────────┐
   │ CLOSE  SPEECH       │────331
   │ CIRCUIT             │
   └──────────┬──────────┘
              ↓
          ╱───────╲          1
         ╱   Scf    ╲─────────────────┐
         ╲          ╱                 │
          ╲───────╱                   │
   333      │ 0                ┌───────┴──────┐
            │                  │  1 ─ CDA     │────340
            │                  └───────┬──────┘
            │                  ┌───────┴──────┐
            │                  │ DISPLAY FAULTY│───341
            │                  │ POINT         │
            │                  └───────┬──────┘
            ↓                          │
          ╱───────╲          1
         ╱   Scb    ╲─────────────────┐
         ╲          ╱                 │
          ╲───────╱                   │
   333      │ 0                ┌───────┴──────┐
            │                  │  1 ─ CDA     │────343
            │                  └───────┬──────┘
            │                  ┌───────┴──────┐
            │                  │ DISPLAY FAULITY│──344
            │                  │ POINT          │
            │                  └───────┬──────┘
            ┊
            ┊
   ┌────────┴────────┐
   │   0 ─ CUA       │────334
   └─────────────────┘
```